Europäisches Patentamt

European Patent Office

Office européen des brevets

(19)

(11) Numéro de publication: **0 229 078**
**B1**

(12)

# FASCICULE DE BREVET EUROPEEN

(45) Date de publication du fascicule du brevet: **29.08.90**

(51) Int. Cl.⁵: **A 23 C 19/16, B 65 D 85/76**

(21) Numéro de dépôt: **86902849.8**

(22) Date de dépôt: **12.05.86**

(86) Numéro de dépôt international:
**PCT/FR86/00162**

(87) Numéro de publication internationale:
**WO 86/06588 20.11.86 Gazette 86/25**

(54) **PROCEDE DE TRAITEMENT D'UN PRODUIT ALIMENTAIRE FROMAGER, PRODUIT ALIMENTAIRE FROMAGER AINSI OBTENU ET EMBALLAGE POUR LA MISE EN OEUVRE DU PROCEDE.**

(30) Priorité: **10.05.85 FR 8507155**

(43) Date de publication de la demande:
**22.07.87 Bulletin 87/30**

(45) Mention de la délivrance du brevet:
**29.08.90 Bulletin 90/35**

(84) Etats contractants désignés:
**AT BE CH DE FR GB IT LI LU NL SE**

(56) Documents cités:
**EP-A-0 048 123
BE-A- 483 772
DE-B-1 132 787
DE-C- 626 383
DE-C- 653 344
DE-C- 858 631
FR-A-2 345 360**

(73) Titulaire: **BONGRAIN S.A.
Le Moulin-à-Vent
F-78280 Guyancourt (FR)**

(72) Inventeur: **FILLAUD, Catherine, Marie-Yvonne
3, rue Jacques Vernier
F-88300 Neufchateau (FR)**
Inventeur: **FROMAGE, Bernard, Jean Yves
Villa Les Noyers
F-52150 Saint-Thiebaud-Bourmont (FR)**

(74) Mandataire: **Derambure, Christian
BUGNION ASSOCIES 55, rue Boissonade
F-75014 Paris (FR)**

Courier Press, Leamington Spa, England.

## Description

L'invention concerne un procédé de traitément d'un produit alimentaire fromager, le produit alimentaire ainsi obtenu, l'emballage pour la mise en oeuvre du procédé.

On sait que l'industrie fromagère classe habituellement, les fromages selon plusieurs grandes familles qui diffèrent les unes des autres selon le type général de pâte et la technique de fabrication employée. Ces familles sont notamment: les fromages frais, les fromages à pâte molle (a croûte lavée ou à croûte fleurie), les fromages à pâte persillée, les fromages à pâte pressée non cuite, les fromages à pâte pressée cuite, les fromages de chèvre. A ces familles traditionnelles s'ajoute la famille très particulière des fromages fondus obtenus à partir de fromages à pâte pressée cuite ou non cuite et, éventuellement, d'additifs, ayant subi un traitement très spécifique de fonte à une température au moins égale à 75°C, en présence de sels de fonte ou autres additifs technologiques. Les techniques de fabrication employées sont très différentes les unes des autres, même entre les différentes familles traditionnelles. Elles conduisent a des produits dont le caillé, avant éventuel affinage, présente des caractéristiques très différentes, notamment un extrait sec compris entre 25% environ et plus de 75%.

Les fromages des familles traditionnelles posent, de façon connue, le problème de leur conservation. C'est précisément pour résoudre ce problème de conservation que l'on a proposé les fromages fondus qui se présentent sous la forme d'un gel sans croûte et de longue conservation. Toutefois, les fromages fondus sont très différents des fromages des familles traditionnelles en ce qui concerne leur texture, leur consistance, leur présentation (généralement un emballage en portions sous feuille métal, groupées en boîte), leur destination (notamment une pâte à tartiner), les consommateurs (notamment les enfants) et surtout leur goûts (souvent très différent de celui du fromage matière première employé).

Un développement de la technique de fabrication des fromages traditionnels à pâte molle est décrit dans le brevet français 1437562 qui prévoit la présence d'une enveloppe artificielle rapportée, destinée à être retirée, de manière que l'utilisateur consomme un fromage sans croûte, celle-ci étant considérée comme un inconvénient à éviter.

La technique très spécifique de fabrication des fromages fondus a fait l'objet de nombreux développements propres et notamment les brevets européen 33635, et français 2382196, 104483, 1301264. Ainsi qu'il a été indiqué précédemment cette technique du fromage fondu est différente et même opposée à celle des fromages traditionnels précédemment décrits. Le brevet européen 33635 prévoit d'appliquer sur la face supérieure libre d'un fromage fondu placé dans un moule, une barrière imperméable pour interdire toute interaction entre le fromage fondu proprement dit et des micro-organismes puvérisés sur cette face supérieure libre et dont le développement est réalisé lorsque le moule est scellé de façon presque hermétique.

Le document DE 653 344 revendique l'application d'un gel sur un fromage frais, l'affinage ayant lieu en totalité après cet enrobage avec le gel.

Le document DE 626 383 décrit la réalisation d'une enveloppe de pectine sur un fromage fondu. Ce même document met en évidence les inconvénients de l'emploi de la gélatine, par opposition à la pectine.

Un des buts de l'invention est de proposer un fromage essentiellement de type traditionnel—et par conséquent à l'exclusion des fromages fondus—affiné ou non, et préférentiellement à pâte molle ayant une durée de conservation très notablement augmentée.

Un autre but de l'invention est de proposer un fromage du type mentionné précédemment dans lequel l'affinage est contrôlé de manière que le produit obtenu présente une texture originale et attrayante.

Un autre but de l'invention est de proposer un fromage dont la présentation extérieure soit originale et attrayante et dont la couche externe (ou croûte) soit consommable.

A cet effet, l'invention propose d'abord un produit alimentaire comportant une masse de fromage originellement peu affiné-c'est-à-dire après un saumurage suivi d'un affinage primaire d'une durée de l'ordre de quelques heures à quelques jours—, à l'exclusion des fromages fondus, caractérisé par le fait qu'il comporte également associé à, sur et tout autour, de la masse de fromage une enveloppe extérieure essentiellement semi-perméable, constituée par un gel alimentaire qui est une solution aqueuse d'au moins un composé choisi dans le groupe formé par les alginates, les carraghénates, la gélatine, les protéines alimentaires ou leur mélange.

L'invention propose ensuite un procédé de traitement d'un tel produit alimentaire qui comporte les étapes suivantes:

1. On revet une masse de fromage peu affiné—c'est-à-dire après un saumurage suivi d'un affinage primaire d'une durée de l'ordre de quelques heures à quelques jours—d'une enveloppe extérieure essentiellement semi-perméable constituée par un gel alimentaire;

2. On place sur la surface externe du gel des ferments de surfaces aptes à permettre le développement de flores externes de surface correspondant au goût recherché, notamment choisis parmi les pencillium;

3. On applique sur l'enveloppe extérieure um emballage apte d'une part à permettre le développement contrôlé des flores externes sur la surface du produit et dans le temps et, d'autre part à permettre l'affinage contrôlé de la masse de fromage en vue d'assurer une durée de vie prolongée.

L'invention propose enfin un emballage pour la mise en oeuvre du procédé qui comporte au moins une couche interne notamment souple et appliquée dans son ensemble sur le produit et ayant pour fonction de ménager des zones masques ou le produit—notamment l'enveloppe extérieure—est en contact avec elle et d'autres zones libres, les zones libres autorisant le développement des flores externes de surface, et, au contraire, les zones masques empêchant le développement, la combinaison des zones libres avec flore et des zones masques sans flore ayant pour fonction de limiter le développement des flores en surface ce qui à également pour effet de diriger l'affinage au produit en de prolonger sa durée de vie.

L'invention permet donc de traiter un fromage de type traditionnel et non un fromage fondu pour diriger son affinage et prolonger sa durée de vie.

L'invention permet donc de résoudre le problème du traitement d'un produit "vivant" et évolutif (par opposition à un produit "mort" et non évolutif comme un fromage fondu qui n'est pas soumis à ce problème) de manière que son affinage ait lieu mais de façon suffisamment ralenti pour que le produit garde ses propriétés organoleptiques et que, simultanément, la durée de vie soit augmentée.

L'invention a insi permis de réaliser des fromages à pâte molle dont la durée de vie était prolontée de 20 jours à 40 jours, le fromage étant néanmoins affiné de façon satisfaisante.

De plus, l'invention permet d'obtenir ce résultat surprenant avec une croûte consommable et un aspect extérieur totalement original notamment comprenant une succession de zones, avec flore d'une couleur notamment blanche et de zones d'une autre couleur sans flore (notamment orange).

L'invention sera bien comprise grâce à la description qui suivra en référence aux dessins annexés dans lesquels:

—La figure 1 est une vue schématique en coupe d'un produit alimentaire selon l'invention dans une forme de réalisation possible.

—La figure 2 est une vue schématique partielle à plus grande échelle de la figure 1.

—La figure 3 est une vue schématique partielle en coupe d'une autre forme de réalisation possible du produit alimentaire selon l'invention.

—La figure 4 est une vue schématique en perspective du produit affiné sans son emballage.

L'invention concerne un procédé de traitement d'un produit alimentaire fromager, le produit alimentaire fromager ainsi obtenu et l'emballage pour la mise en oeuvre du procédé.

Le produit alimentaire comporte une masse de fromage 1 qui originellement est peu affinée. Le fromage considéré est préférentiellement un fromage à pâte molle dont le taux de gras sur sec est compris entre environ 25% et 75%. Toutefois, l'invention s'applique également à d'autres types de fromages évolutifs à l'exclusion cependant des fromages fondus non évolutifs par nature. L'invention s'applique donc aussi à un fromage à pâte persillée, c'est-à-dire une pâte comportant intérieurement des pénicilliums du genre pénicillium roqueforti ou toutes autres pâtes molles ou pressées ou semi-pressées.

Un enveloppe extérieure 2, essentiellement semi-perméable constituée par un gel alimentaire est associée à, sur et tout autour de la masse de fromage 1. Cette enveloppe 2 a essentiellement pour fonction de régler les échanges d'éléments (notamment enzymes, ions, gaz, sels, acides aminés, etc. . .) de la masse de fromage 1 vers l'extérieur et dans le sens opposé en vue d'assurer un affinage dirigé du produit et, simultanément, de prolonger sa durée de vie.

Le milieu extérieur qui est mentionné et par rapport auquel l'enveloppe 2 constitue une barrière semi-perméable est constituée à la fois par l'atmosphère extérieure au contact du produit et par des flores externes de surface 3 se développant sur l'enveloppe extérieure 3 et sur lesquelles on reviendra ultérieurement.

Les échanges d'éléments entre la masse de fromage 1 et l'extérieur constituent des phénomènes complexes en ce qui concerne la nature des éléments en migration et leur sens de migration. Toutefois, la présence de l'enveloppe semi-perméable 2 permet de régler ces échanges de façon favorable. Notamment, l'enveloppe 2 permet une certaine migration de l'eau et des acides aminés de la masse du fromage 1 vers l'extérieur de manière à permettre l'affinage de la masse de fromage 1 à une vitesse ralenti et autorise un certain passage d'oxygène de l'extérieur vers l'intérieur.

L'enveloppe 2 a également pour fonction, simultanément, de constituer un support pour des flores externes de surface 3 correspondant au goût recherché. Ceci est combiné à la semi-perméabilité de l'enveloppe 2, il en résulte que l'affinage du produit bénéficie qualitativement de la présence des flores de surface 3, mais que, inversement, les flores 3 ne réduisent pas la durée de vie du produit par dégradation rapide de la masse de fromage 1.

L'enveloppe extérieure 2 a également pour fonction, simultanément, de constituer un support pour un milieu nutritif approprié aux flores externes de surface 3. Ce milieu nutritif est constitué par exemple par un produit choisi dans le groupe formé par le glucose, le tryptone, les extraits de levure, le chlorure de sodium, ou tout corps équivalent.

Selon une première variante de réalisation, le gel constituant l'enveloppe 2 est une solution aqueuse d'au moins un composé choisi dans le groupe formé par les alginates ou les carraghénates. Ces composés étant pauvres en substance essentielle pour le développement correct des micro-organismes de surface, il est prévu dans cette variante, un ajout de sources carbonées et azotées afin d'assurer le bon développement de la flore externe 3.

Dans une seconde variante possible de réalisation, le gel est une solution aqueuse comportant des protéines alimentaires telle que de la gélatine dont la constitution ne nécessite aucun apport extérieur pour le développement de la flore externe 3.

Dans un cas comme dans l'autre, l'enveloppe 2 présente normalement une bonne rétention à l'eau.

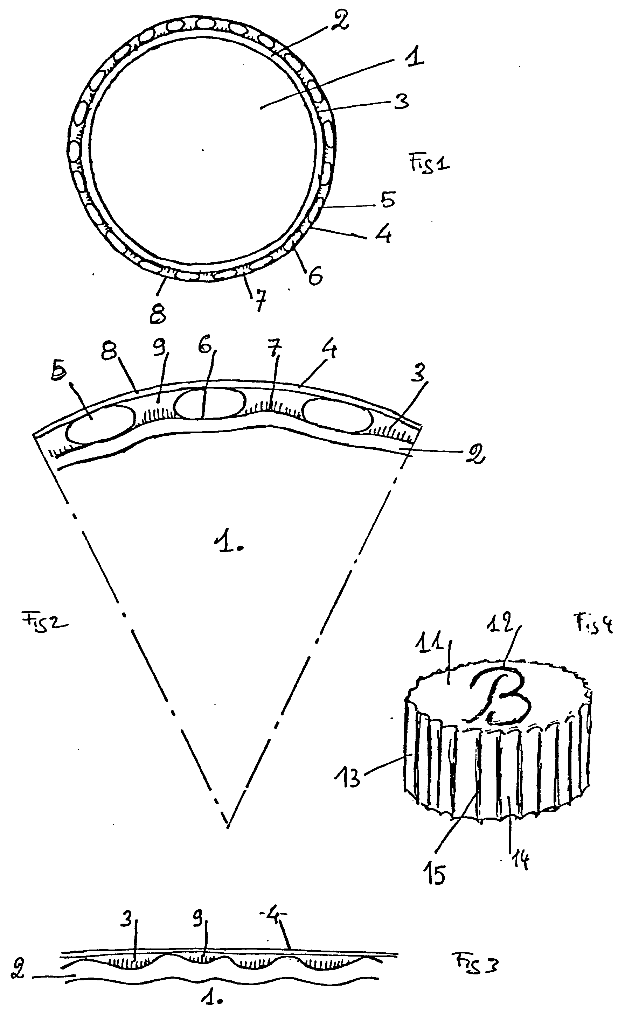

Selon une caractéristique particulière de l'invention, le produit alimentaire comporte également un emballage 4 qui comprend au moins une couche interne 5 souple, appliquée dans son ensemble sur le produit et ayant pour fonction de ménager des zones masque 6 et des zones libres 7. Les zones masque 6 sont les zones ou la couche interne 5 est au contact avec le produit, notamment son enveloppe extérieure 2. Les zones libres 7 sont les autres zones où la couche interne 5 de l'emballage 4 comporte des perforations (première variante des figures 1 et 2) ou est écartée du produit alimentaire (deuxième variante de la figure 3). Les zones libres 7 autorisent le développement des flores externes de surface 3 et, au contraire les zones masques 6 empêchent ce développement. La combinaison des zones libres 7 avec flore et des zones masques 6 sans flore a pour fonction de limiter le développement des flores 3 en surface, ce qui a également pour effet, en combinaison avec l'enveloppe semi-perméable 2, de contrôler l'affinage du produit et de prolonger sa durée de vie.

L'emballage 4 comprend également, préférentiellement, en combinaison au moins une couche externe 8, souple, fortement perméable à l'oxygène et faiblement perméable à la vapeur d'eau appliquée sur la couche interne 5 de manière à obtenir dans les zones libres 7 un taux d'humidité important favorisant le développement des flores de surface 3.

Les flores externes sont obtenues par exemple à partir de pénicillium et notamment de pénicillium candidum.

Les micro-organismes permettant le développement des flores externes des surface 3 ou visant à donner au produit un certain goût se développent sur ou dans l'enveloppe 2.

L'enveloppe extérieure 2 constitue par elle-même une certaine barrière semi-perméable à l'oxygène. Cet effet peut être renforcé, l'enveloppe extérieure 2 ayant alors également pour fonction de constituer un support pour un produit anti-oxydant participant au contrôle de l'affinage et à la prolongation de la durée de vie du produit.

Un produit anti-oxydant est choisi parmi le groupe comprenant les caroténoïdes, l'acide ascorbique, l'acide citrique, les tocophérols, et les autres substances alimentaires ayant une action anti-oxygénée.

Selon une autre caractéristique, l'enveloppe extérieure 2 a également pour fonction de constituer un support pour un colorant alimentaire.

Selon une autre caractéristique, l'enveloppe extérieure 2 a également pour fonction de constituer un support pour des bactéries et/ou des micro-organismes supplémentaires agissant sur la masse de fromage 1 pour lui donner un goût particulier. Ces bactéries sont par exemple des bactériums linens.

L'enveloppe extérieure 2 a une épaisseur de l'ordre de 0,5 mm à 1,5 mm de manière à assurer la semi-perméabilité recherchée et ceci en fonction de la nature de l'enveloppe.

La couche interne 5 de l'emballage 4 présente une certaine épaisseur, notamment de l'ordre de 2 mm à 4 mm, de manière à créer dans les zones libres 7 des volumes 9 pour le développement des flores de surface 3.

Préférentiellement, les zones masques 6 et les zones libres 7 sont réparties au moins partiellement de façon au moins sensiblement régulière, soit selon la configuration de la couche interne 5 (première variante de la figure 2), soit au hasard selon les zones de contact de la couche interne 5 sur le produit (deuxième variante de la figure 3).

La couche interne 5 peut faire l'objet de différentes formes de réalisation. Elle peut être constituée par une nappe ayant une forme générale de paillon dont les éléments constitutifs sont disjoints (figure 2) ou encore par un matériau ondulé de manière à créer de façon sûre des zones de contact écartés les unes des autres de la couche interne 5 sur le produit (non représenté). La couche interne 5 peut être constituée également par une nappe continue, les zones de contact sur le produit et les zones où il n'y a pas contact résultant de la forme irrégulière non parfaitement lisse du produit.

Les zones libres 7 peuvent représenter entre 15% et 60% environ de la superficie extérieure totale du produit.

Le colorant comprend par exemple au moins un caroténoïde de couleur orangée. D'autres colorants sont possibles dès lors qu'ils sont de qualité alimentaire.

La couche externe 8 de l'emballage 4 est réalisée au moyen d'un film de polyéthylène ou de polypropylène ou tout autre matériau équivalent donnant les caractéristiques de perméabilité à l'oxygène et d'imperméabilité à la vapeur d'eau précédemment mentionnées.

L'emballage décrit précédemment, notamment la couche interne 5 peut être agencée de manière que les zones masques 6 et les zones libres 7 déterminent sur le produit des motifs décoratifs.

Le produit réalisé une fois enlevé de son emballage 4 peut se présenter sous la forme générale de la figure 4. Dans ce cas, le produit a une forme générale cylindrique. Sur une face d'extrémité 11 circulaire est réalisé un motif décoratif 12 tel qu'une lettre ou tout autre motif au moyen d'un emballage 4 ayant défini des zones masques 6 et des zones libres 7 appropriées et au moyen du colorant incorporé dans l'enveloppe externe 2. La face latérale cylindrique 13 peut comporter des sortes de cannelures en creux 14 séparant des saillies axiales 15, les saillies 15 correspondant aux zones libres 7 et les creux 14 correspondant aux zones masques 6. Il en résulte alors des creux 14 de couleur orangée lorsque l'on a incorporé à l'enveloppe extérieure 2 un colorant tel qu'un caroténoïde alors que les saillies 15 sont de couleur blanche du fait de l'ensemencement avec un pénicillium camemberti.

Il est clair que d'autres formes de réalisation sont possibles.

L'invention concerne également un procédé de traitement d'un produit alimentaire comportant une masse de fromage 1 originellement peu affiné et donc à l'exclusion des fromages fondus. Selon le procédé, on revêt cette masse de fromage peu affiné d'une enveloppe extérieure 2 essentiellement semi-perméable constituée par un gel alimentaire, puis on place sur la surface externe de l'enveloppe 2 des ferments de surface aptes à permettre le développement de flores externes de surface 3 correspondant au goût recherché pour le produit et notamment choisis parmi les pénicillium; et enfin on applique sur l'enveloppe extérieure 2 un emballage apte d'une part à permettre le développement contrôlé des flores externes 3 sur la surface du produit et dans le temps, et d'autre part, à permettre l'affinage contrôlé de la masse de fromage 1 en vue d'assurer une durée de vie prolongée.

Dans une première variante de réalisation, pour préparer le gel destiné à constituer l'enveloppe extérieure 2, on dissout dans l'eau de 5 à 50 g/l de carraghénanes ou d'alginates, de 2 à 5 g/l de tryptone, de 0,5 à 3 g/l de glucose, de 1 à 5 g/l d'extrait de levure.

Dans une seconde variante de réalisation pour préparer le gel, on dissout dans l'eau de 50 à 400 g/l de gélatine.

Pour revêtir la masse de fromage 1 avec l'enveloppe extérieure 2, on réalise le gel, ainsi qu'il a été mentionné précédemment, on le porte à une température de l'ordre de 30°C à 75°C pour le rendre liquide ou visqueux. Puis, soit on vaporise le gel dans cette consistance sur la masse de fromage 1, soit on trempe la masse de fromage 1 dans le gel et on laisse le gel se solidifier notamment à température ambiante ou voisine de la température ambiante.

On revêt la masse de fromage avec le gel pour former l'enveloppe extérieure 2 après un saumurage suivi d'un affinage primaire de la masse de fromage 1, cet affinage primaire s'étendant pendant une durée de l'ordre de quelques heures à quelques jours.

Selon les besoins et en référence à ce que l'on a indiqué précédemment, on ajoute au gel, lors de sa préparation, un milieu nutritif approprié aux ferments de surface choisis notamment dans le groupe formé par le glucose, le tryptone, les extraits de levure, le chlorure de sodium; et/ou un produit oxydant choisi notamment dans le groupe constitué par les caroténoïdes, l'acide ascorbique, l'acide citrique, les tocophérols, le substances alimentaires ayant une action anti-oxygénée; et/ou des bactéries et/ou des micro-organismes pour donner un goût particulier à la masse de fromage notamment des bactériums linens; et/ou un colorant alimentaire notamment un caroténoïde.

Préférentiellement, on place les ferments de surface dès solidification du gel et sur toute la surface extérieure du produit notamment par vaporisation.

Préférentiellement, on applique l'emballage sur toute l'enveloppe externe 2 après un affinage secondaire du produit allant de quelques heurs à quelques, notamment deux jours.

En ce qui concerne la mise en place de l'emballage 4 sur le produit, on applique d'abord une première couche interne 5 permettant de constituer des zones masques 6 et des zones libres 7 puis une seconde couche externe 8 fortement perméable à l'oxygène et faiblement perméable à la vapeur d'eau.

Enfin, l'invention concerne un emballage 4 destiné à un produit alimentaire du type décrit précédemment, c'est à dire comportant une masse de fromage originellement peu affiné et donc à l'exclusion des fromages fondus. Cet emballage comporte au moins une couche interne 5, souple destinée à être appliquée dans son ensemble sur le produit et ayant pour fonction de ménager des zones masques ou le produit, notamment son enveloppe extérieure 2, est en contact avec la couche interne 5 et d'autres zones libres 7, les zones libres 7 autorisant le développement des flores externes de surace 3 et, au contraire, les zones masques 6 empêchant ce développement, la combinaison des zones libres 7 avec flore et des zones masques 6 sans flore ayant pour fonction de limiter le développement des flores 3 en surface, ce qui a également pour effet de diriger l'affinage du produit et de prolonger sa durée die vie. L'emballage selon l'invention remplit donc non seulement une fonction générale de protection mécanique du produit mais encore participe activement à l'affinage.

Comme indiqué précédemment, la couche interne 5 présente préférentiellement une épaisseur de l'ordre de 2 mm à 4 mm de manière à créer dans les zones libres 7 des volumes 9 pour le développement des flores de surface 3. Cette couche interne 5 est par exemple constituée par une nappe ayant une forme générale de paillon dont les éléments constitutifs sont disjoints ou par un matériau ondulé ou encore par une feuille continue présentant certaines zones de contact avec le produit et certaines zones écartées du fait de la surface irrégulière et non lisse de produit. La forme de réalisation de la couche interne 5 par un paillon présente l'avantage que les éléments constitutifs de la couche interne 5 présentent une certaine souplesse transversale protégeant efficacement le produit alimentaire du point de vue mécanique.

Dans les zones masques, la couche interne 5 étant au contact avec le produit alimentaire empêche le développement de la flore externe de surface 3, ce développement étant possible dans les zones libres 7. Pour favoriser ce développement l'emballage comprend également au moins une couche externe 8, souple fortement perméable à l'oxygène et faiblement perméable à la vapeur d'eau, appliquée sur la couche interne 5 de manière à obtenir dans les zones libres 7 au taux d'humidité important. Cette couche externe 8 peut être réalisée par exemple en polyéthylène ou polypropylène.

**Revendications**

1. Produit alimentaire comportant une masse de fromage originellement peu affiné—c'est-à-dire après un saumurage suivi d'un affinage primaire d'une durée de l'ordre de quelques heures à quelques jours—, à l'exclusion des fromages fondus, caractérisé par le fait qu'il comporte également associé à, sur et tout autour, de la masse de fromage (1) une enveloppe extérieure (2) essentiellement semi-perméable, constituée par un gel alimentaire qui est une solution aqueuse d'au moins un composé choisi dans le groupe formé par les alginates, les carraghénates, la gélatine, les protéines alimentaires ou leur mélange.

2. Produit alimentaire selon la revendication 1, caractérisé en par le fait que l'enveloppe extérieure (2) constitue un support pour des flores externes de surface (3) correspondant au goût recherché.

3. Produit alimentaire selon l'une quelconque des revendications 1 et 2, caractérisé par le fait que l'enveloppe extérieure (2) constitue un support pour un milieu nutritif approprié aux flores externes de surface (3).

4. Produit alimentaire selon la revendication 3, caractérisé par le fait que le milieu nutritif est constitué par un produit choisi dans le groupe formé par le glucose, le tryptone, les extraits de levure, le chlorure de sodium.

5. Produit alimentaire selon l'une quelconque des revendications 1 à 4, caractérisé par le fait qu'il comporte également un emballage (4) qui comprend au moins une couche (5) notamment souple et appliquée dans son ensemble sur le produit tout en ménageant des zones masques (6) ou le produit—notamment l'enveloppe extérieure (2)—est en contact avec elle et d'autres zones libres (7), les zones libres (7) autorisant le développement des flores externes de surface (3), et, au contraire, les zones masques (6) empêchant ce développement, la combinaison des zones libres (7) avec flore et des zones masque (6) sans flore ayant pour fonction de limiter le développement des flores (3) en surface ce qui à également pour effet, en combinaison avec l'enveloppe semi-perméable (2), de diriger l'affinage du produit et de prolonger sa durée de vie.

6. Produit alimentaire selon la revendication 5, caractérisé par le fait que l'emballage (4) comprend également, en combinaison, au moins une couche externe (8), souple, fortement perméable à l'oxygène et faiblement perméable, à la vapeur d'eau appliquée sur la couche interne (5) de manière à obtenir dans les zones libres (7) avec flore un taux d'humidité favorisant le développement des flores de surface (3).

7. Produit alimentaire selon l'une quelconque des revendications 1 à 6, caractérisé par le fait que les flores externes (3) sont obtenues à partir de penicillium et notamment de penicillium candidum.

8. Produit alimentaire selon l'une quelconque des revendications 1 à 7, caractérisé par le fait que l'enveloppe extérieure (2) constitue un support pour un produit anti-oxydant participant au contrôle de l'affinage et à la prolongation de la durée de vie du produit.

9. Produit alimentaire selon l'une quelconque des revendications 1 à 8, caractérisé par le fait que l'enveloppe extérieure (2) constitue un support pour un colorant alimentaire.

10. Produit alimentaire selon l'une quelconque des revendications 1 à 9, caractérisé par le fait que l'enveloppe extérieure (2) constitue un support pour des bactéries et/ou micro-organismes supplémentaires agissant sur la masse de fromage (1) pour lui donner un goût particulier.

11. Produit alimentaire selon la revendication 10, caractérisé par le fait que les bactéries sont des bacteriums linens.

12. Produit alimentaire selon l'une quelconque des revendications 1 à 11, caractérisé par le fait que l'enveloppe extérieure (2) a une épaisseur de l'ordre de 0,5 mm à 1,5 mm, propre à assurer la semi-perméabilité recherchée, en fonction de la nature de l'enveloppe.

13. Produit alimentaire selon l'une quelconque des revendications 1 à 12, caractérisé par le fait que la masse de fromage (1) est du type à pâte molle dont le taux de gras sur sec est compris entre environ 25% et 75%.

14. Produit alimentaire selon la revendication 5, caractérisé par le fait que la couche interne (5) de l'emballage (4) présente une épaisseur, de l'ordre de 2 mm à 4 mm de manière à créer dans les zones libres (7) des volumes (9) pour le développement des flores de surface (3).

15. Produit alimentaire selon l'une quelconque des revendications 1 à 14, caractérisé par le fait que les zones masques (6) et les zones libres (7) sont réparties au moins partiellement de façon au moins sensiblement régulière soit au hasard, selon les zones d'appui de la couche interne (5) sur le produit, soit selon la configuration de la couche interne (5).

16. Produit alimentaire selon l'une quelconque des revendications 1 à 15, caractérisé par le fait que la couche interne (5) est constituée ou par une nappe ayant une forme générale de paillon dont les éléments constitutifs sont disjoints ou par un matériau ondulé.

17. Produit alimentaire selon l'une quelconque des revendications 1 à 16, caractérisé par le fait que les zones libres (7) représentent entre 15% et 60% environ de la superficie extérieure totale du produit.

18. Produit alimentaire selon la revendication 9, caractérisé par le fait que le colorant comprend au moins un caroténoïde.

19. Produit alimentaire selon la revendication 16, caractérisé par le fait que la couche externe (8) de l'emballage (4) est réalisée au moyen d'un film de polyéthylène ou de polypropylène.

20. Procédé de traitement d'un produit alimentaire comportant une masse de fromage orignellement peu affiné, à l'exclusion des fromages fondus, caractérisé par le fait qu'on revet une masse de fromage (1) peu affiné—c'est-à-dire après saumurage suivi d'un affinage primaire d'une durée de l'ordre de quelques heures à quelques jours—d'une enveloppe extérieure (2) essentiellement semi-perméable constituée par un gel alimentaire qui est une solution aqueuse d'au moins un composé choisi dans le groupe formé par les alginates, les carraghénates, la gélatine, les protéines alimentaires ou leur mélange; on place sur la surface externe de l'enveloppe (2) des ferments de surfaces aptes à permettre le développement de flores externes de surface (3) correspondant au goût recherché, notamment choisis parmi les penicillium; on applique sur l'enveloppe extérieure un emballage apte d'une part à permettre le développement contrôlé des flores externes (3) sur la surface du produit et dans le temps et, d'autre part à permettre l'affinage contrôlé de la masse de fromage (1) en vue d'assurer une durée de vie prolongée.

21. Procédé selon la revendication 20, caractérisé par le fait que pour préparer le gel on dissout dans l'eau de 5 à 50 g/l de carraghénane, de 2 à 5 g/l de tryptone, de 0,5 à 3 g/l de glucose, de 1 à 5 g/l d'extrait de levure.

22. Procédé selon la revendication 20, caractérisé par le fait que pour préparer le gel on dissout dans l'eau de 50 à 400 g/l de gélatine.

23. Procédé selon l'une quelconque des revendications 20 à 22 caractérisé par le fait que pour revêtir la masse de fromage (1) avec l'enveloppe extérieure (2), on réalise le gel, on le porte à une température de l'ordre de 30°C à 75°C pour le rendre liquide ou visqueux, soit on vaporise le gel dans cette consistance sur la masse de fromage (1) soit on trempe la masse de fromage (1) dans le gel, on laisse le gel se solidifier notamment à température ambiante ou voisine.

24. Procédé selon l'une quelconque des revendications 20 à 23 caractérisé par le fait qu'on ajoute au gel, lors de sa préparation un milieu nutritif approprié aux ferments de surface choisi notamment dans le groupe formé par le glucose, le tryptone, les extraits de levure, le chlorure de sodium; et/ou un produit anti-oxydant choisi notamment dans le groupe constitué par les caroténoïdes, l'acide ascorbique, l'acide citrique, les tocopherols, les substances alimentaires ayant une action anti-oxygénée; et/ou des bactéries et/ou des micro-organismes pour donner un goût particulier à la masse de fromage, notamment des bactériums linens; et/ou un colorant alimentaire notamment un caroténoïde.

25. Procédé selon l'une quelconque des revendications 20 à 24, caractérisé par le fait qu'on place les ferments de surfaces dès solidification du gel et sur toute sa surface extérieure notamment par vaporisation.

26. Procédé selon l'une quelconque des revendications 20 à 25, caractérisé par le fait qu'on applique l'emballage sur toute l'enveloppe externe (2) après un affinage secondaire du produit allant de quelques heures à quelques (notamment deux) jours.

27. Procédé selon l'une quelconque des revendications 20 à 26, caractérisé par le fait qu'on applique d'abord une première couche interne (5) d'emballage permettant de constituer des zones masques (6) et des zones libres (7) puis une seconde couche externe (8) fortement perméable à l'oxygène et faiblement perméable à la vapeur d'eau.

28. Emballage destiné à un produit alimentaire comportant une masse de fromage originellement peu affiné, à l'exclusion des fromages fondus selon l'une quelconque des revendications 1 à 19, caractérisé par le fait qu'il comporte au moins une couche interne (5) notamment souple destinée à être appliquée dans son ensemble sur le produit et ayant pour fonction de ménager des zones masques (6) ou le produit—notamment son enveloppe extérieure (2) est en contact avec la couche interne (5) et d'autres zones libres (7), les zones libres (7) autorisant le développement des flores externes de surface (3), et, au contraire, les zones masque (6) empêchant le développement, la combinaison des zones libres (7) avec flore et des zones masque (6) sans flore ayant pour fonction de limiter le développement des flores (3) en surface ce qui à également pour effet de diriger l'affinage du produit et de prolonger sa durée de vie; et, en combinaison au moins une couche externe (8) souple, fortement perméable à l'oxygène et faiblement perméable à la vapeur d'eau, appliquée sur la couche interne (5) de manière à obtenir dans les zones libres (7) avec flore un taux d'humidité favorisant le développement des flores de surface (3), la couche externe (8) étant constituée par un film en polyéthylène ou polypropylène; la couche interne (5) étant constituée par une nappe ayant une forme générale de paillon dont les éléments constitutifs sont disjoints ou par un matériau ondulé, les zones libres (7) représentant entre 15% et 60% environ de la superficie extérieure totale du produit.

**Patentansprüche**

1. Nahrungsmittel aus einer zunächst wenig reifen Käsemasse—d.h. nach dem Einlegen in Salzlake und einer anschließenden ersten Reifung von einer Dauer in der Größenordnung von einigen Stunden bis zu einigen Tagen—mit Ausnahme von Schmelzkäse, gekennzeichnet durch eine auf der und um die Käsemasse (1) herum angeordnete und damit Verbundene, im wesentlichen halbdurchlässige äußere Hülle (2), welche aus einem Lebensmittelgel gebildet ist, das eine wäßrige Lösung aus wenigstens einer aus der Gruppe der Alginate, der Karraghenate, der Gelatine, der Lebensmittelproteine oder deren Mischung ausgewählten Zusammensetzung ist.

2. Nahrungsmittel nach Anspruch 1, dadurch gekennzeichnet, daß die äußere Hülle (2) einen Träger für die äußere Oberflächenflora (3) entsprechend dem ermittelten Geschmack bildet.

3. Nahrungsmittel nach Anspruch 1 oder 2, dadurch gekennzeichnet, daß die äußere Hülle (2) einen Träger für ein an die äußere Oberflächenflora (3) angepaßtes Nährmittel bildet.

4. Nahrungsmittel nach Anspruch 3, dadurch gekennzeichnet, daß das Nährmittel aus einem aus der durch Glucose, Tryptone, Hefeauszüge, Kochsalz gebildeten Gruppe ausgewählten Produkt gebildet ist.

5. Nahrungsmittel nach einem der Ansprüche 1 bis 4, dadurch gekennzeichnet, daß es eine Umhüllung (4) aufweist, die mindestens eine Schicht (5) hat, welche insbesondere geschmeidig ist und als Ganzes auf dem Produkt aufgebracht ist, wobei abgedeckte Bereiche (6) dort, wo das Produkt, insbesondere die äußere Hülle (2) mit der Schicht in Berührung ist, und andere freien Bereiche (7) verteilt sind, von denen die freien Bereiche (7) die Entwicklung der äußeren Oberflächenflora (3) zulassen und von denen im Gegensatz dazu die abgedeckten Bereiche (6) diese Entwicklung verhindern, und wobei die Kombination aus freien Bereichen (7) mit Flora und aus abgedeckten Bereichen (6) ohne Flora die Funktion haben, die Entwicklung von Oberflächenflora (3) zu begrenzen, was wiederum zur Folge hat, daß in Kombination mit der halbdurchlässigen Hülle (2) die Reifung des Produktes steuerbar und die Haltbarkeit des Produktes verlängerbar ist.

6. Nahrungsmittel nach Anspruch 5, dadurch gekennzeichnet, daß die Verpackung (4) in Kombination mindestens eine äußere Schicht (8) aufweist, welche geschmeidig, stark sauerstoffdurchlässig und nur schwach wasserdampfdurchlässig, welche äußere Schicht (8) auf die innere Schicht (5) so aufgebracht ist, daß in den freien Bereichen (7) mit Flora ein Feuchtigkeitsgehalt entsteht, welcher die Entwicklung von äußerer Oberflächenflora (3) begünstigt.

7. Nahrungsmittel nach einem der Anspüche 1 bis 6, dadurch gekennzeichnet, daß die äußere Flora (3) ausgehend von Penicillium und insbesondere von Penicillium Candidum gebildet ist.

8. Nahrungsmittel nach einem der Ansprüche 1 bis 7, dadurch gekennzeichnet, daß die äußere Hülle (2) einen Träger für ein oxydationshemmendes Produkt bildet, welches an der Kontrolle der Reifung und an der Verlängerung der Haltbarkeit des Produktes mitwirkt.

9. Nahrungsmittel nach einem der Ansprüche 1 bis 8, dadurch gekennzeichnet, daß die äußere Hülle (2) einen Träger für eine Lebensmittelfarbe bildet.

10. Nahrungsmittel nach einem der Ansprüche 1 bis 9, dadurch gekennzeichnet, daß die äußere Hülle (2) einen Träger für Bakterien und/oder zusätzliche Mikroorganismen bildet, die auf die Käsemasse (1) wirken, um ihr einen besonderen Geschmack zu verleihen.

11. Nahrungsmittel nach Anspruch 10, dadurch gekennzeichnet, daß es sich bei den Bakterien um Bakteria Linens handelt.

12. Nahrungsmittel nach einem der Ansprüche 1 bis 11, dadurch gekennzeichnet, daß die äußere Hülle (2) eine Dicke in der Größenordnung von 0,5 mm bis zu 1,5 mm hat, so daß entsprechend der Art der Hülle die erforderliche Halbdurchlässigkeit sichergestellt ist.

13. Nahrungsmittel nach einem der Ansprüche 1 bis 12, dadurch gekennzeichnet, daß die Käsemasse (1) von der Art einer weichen Rohmasse ist, deren Fettgehalt in der Trockenmasse zwischen 25% und 75% liegt.

14. Nahrungsmittel nach Anspruch 5, dadurch gekennzeichnet, daß die innere Schicht (5) der Verpackung (4) eine Dicke in der Größenordnung von 2 mm bis zu 4 mm aufweist, so daß in den freien Bereichen (7) Räume (9) für die Entwicklung äußerer Oberflächenflora (3) entstehen.

15. Nahrungsmittel nach einem der Ansprüche 1 bis 14, dadurch gekennzeichnet, daß die abgedeckten Bereiche (6) und die freien Bereiche (7) zumindest teilweise so aufgeteilt sind, daß sie im wesentlichen regelmäßig sind, entweder zufällig entsprechend den Bereichen, an denen sich die innere Schicht (5) am Produkt abstützt, oder entsprechend der Ausgestaltung der inneren Schicht (5).

16. Nahrungsmittel nach einem der Ansprüche 1 bis 15, dadurch gekennzeichnet, daß die innere Schicht (5) entweder durch einen Mantel mit im wesentlichen der Form einer Flaschenstrohhülse, deren Bestandteile voneinander getrennt sind, oder durch ein gewelltes Material gebildet ist.

17. Nahrungsmittel nach einem der Ansprüche 1 bis 16, dadurch gekennzeichnet, daß die freien Bereiche (7) ungefähr 15% bis 60% de gesamten äußeren Oberfläche des Produktes ausmachen.

18. Nahrungsmittel nach Anspruch 9, dadurch gekennzeichnet, daß die Farbe wenigstens ein Carotinoid enthält.

19. Nahrungsmittel nach Anspruch 16, dadurch gekennzeichnet, daß die äußere Schicht (8) der Verpackung (4) mittels einer Folie aus Polyäthylen oder Polypropylen hergestellt ist.

20. Verfahren zur Behandlung eines Nahrungsmittels aus einer Käsemasse, die zunächst wenig gereift ist, mit Ausnahme von Schmelzkäse, dadurch gekennzeichnet, daß eine wenig gereifte Käsemasse (1)—d.h. nach Einlegen in eine Salzlake und einer ersten Reifung von einer Dauer in der Größenordnung von einigen Stunden bis zu einigen Tagen—mit einer äußeren, im wesentlichen halbdurchlässigen, aus einem Lebensmittelgel gebildeten Hülle (2) versehen wird, wobei das Lebensmittelgel eine Lösung aus mindestens einer aus der Gruppe der Alginate, der Karraghenate, der Gelatine, der Lebensmittelproteine und deren Mischung ausgewählten Zusammensetzung ist, daß auf der äußeren Oberfläche der Hülle (2) Oberflächenfermente, die die Entwicklung von äußerer Oberflächenflora (3) entsprechend dem ermittelten Geschmack erlauben und die vorzugsweise aus der Gruppe Penicillia gewählt werden, aufgebracht werden, daß auf der äußeren Hülle eine Verpackung angebracht wird, die zur Verlängerung der Haltbarkeit einerseits, eine kontrollierte Entwicklung der äußeren Flora (3) auf der Oberfläche des Produktes und in der gewünschten Zeit zulassen und andererseits die kontrollierte Reifung der Käsemasse (1) zu erlauben imstande ist.

21. Verfahren nach Anspruch 20, dadurch gekennzeichnet, daß zur Herstellung des Gels 5 bis 50 g/l Karraghenan, 2 bis 5 g/l Trypton, 0,5 bis 3 g/l Glukose, 1 bis 5 g/l Hefeextrakt in Wasser gelöst wird.

22. Verfahren nach Anspruch 20, dadurch gekennzeichnet, daß zur Zubereitung des Gels 50 bis 400 g/l Gelatine in Wasser gelöst wird.

23. Verfahren nach einem der Ansprüche 20 bis 22, dadurch gekennzeichnet, daß zum Ummanteln der Käsemasse (1) mit der äußeren Hülle (2) ein Gel hergestellt wird, daß dieses auf eine Temperatur zwischen 30°C und 75°C gebracht wird, um es flüssig oder zähflüssig zu machen, daß entweder das Gel in dieser Konsistenz auf der Käsemasse (1) zerstäubt oder die Käsemasse (1) in das Gel eingetaucht wird, und daß man dann das Gel bei Raum- oder Umgebungstemperatur hartwerden läßt.

24. Verfahren nach einem der Ansprüche 20 bis 23, dadurch gekennzeichnet, daß bei der Herstellung des Gels ein geeignetes Nährmittel den Oberflächenfermenten, die insbesondere aus der durch Glukose, Trypton, Hefeextrakte, Natriumchlorid gebildeten Gruppe ausgewählt werden, und/ oder ein oxydationshemmendes Mittel, insbesondere aus der Gruppe der Carotinoide, Askorbinsäure, Zitronensäure, Tocopherole, wobei die Lebensmittelbestandteile eine oxydationshemmende Wirkung haben, und/oder Bakterien und/ oder Mikroorganismen, um der Käsemasse einen besonderen Geschmack zu geben, vorzugsweise Baktera Linens, und/oder eine Lebensmittelfarbe, insbesondere ein Carotinoid zugefügt wird.

25. Verfahren nach einem der Ansprüche 20 bis 24, dadurch gekennzeichnet, daß, sobald das Gel anfängt fest zu werden, Oberflächenfermente, insbesondere durch Zerstäuben auf die ganze äußere Oberfläche aufgebracht werden.

26. Verfahren nach einem der Ansprüche 20 bis 25, dadurch gekennzeichnet, daß nach einer zweiten Reifung des Produktes von einigen Stunden bis zu einigen (insbesondere zwei) Tagen auf die ganze äußere Hülle (2) die Verpackung aufgebracht wird.

27. Verfahren nach einem der Ansprüche 20 bis 26, dadurch gekennzeichnet, daß zuerst eine erste innere Verpackungsschicht (5) zur Bildung von abgedeckten Bereichen (6) und von freien Bereichen (7) und dann eine zweite äußere Schicht (8), die stark sauerstoffdurchlässig und schwach wasserdampfdurchlässig ist, aufgebracht wird.

28. Verpackung für ein Nahrungsmittel aus einer zunächst wenig gereiften Käsemasse, mit Ausnahme von Schmelzkäse, nach einem der Ansprüche 1 bis 19, gekennzeichnet durch mindestens eine innere, insbesondere geschmeidige Schicht (5), welche in ihrer Gesamtheit auf das Produkt aufgebracht ist und abgedeckte Bereiche (6) dort, wo das Produkt, insbesondere seine äußere Hülle (2) mit der inneren Schicht (5) in Kontakt ist und andere freie Bereiche (7) bildet, von denen die freien Bereiche (7) die Entwicklung von äußerer Oberflächenflora (3) erlauben und von denen im Gegensatz dazu die abgedeckten Bereiche (6) die Entwicklung behindern, und wobei die Kombination aus freien Bereichen (7) mit Flora und aus abgedeckten Bereichen (6) ohne Flora bewirken, daß die Entwicklung von Flora (3) auf der Oberfläche begrenzt wird, was wiederum die Wirkung hat, daß die Reifung des Produkts gesteuert und seine Haltbarkeit verlängert werden kann; und in Kombination damit durch mindestens eine äußere, geschmeidige Schicht (8), die stark sauerstoffdurchlässig und schwach wasserdampfdurchlässig ist und auf die innere Schicht (5) so aufgebracht wird, daß in den freien Bereichen (7) mit Flora ein Feuchtigkeitsgehalt erhältlich ist, der die Entwicklung von Oberflächenflora (3) begünstigt und welche äußere Schicht (8) durch eine Folie aus Polyäthylen oder Polypropylen gebildet ist; wobei die innere Schicht (5) durch einen Mantel gebildet ist, der im wesentlichen die allgemeine Form einer Flaschenstrohhülse, deren Bestandteile voneinander getrennt sind, oder durch ein gewelltes Material gebildet ist, wobei die freien Bereiche (7) etwa zwischen 15% und 60% der gesamten Oberfläche des Produktes einnehmen.

## Claims

1. Food product comprising an initially little-matured cheese mass—that is to say after a brining followed by a primary maturing for a period of the order of a few hours to a few days—, with the exception of melted cheeses, characterized in that it also comprises, associated with, on and all around the cheese mass (1) an essentially semipermeable outer envelope (2) consisting of a food gel which is an aqueous solution of at least one compound chosen from the group made up of alginates, carrageenates, gelatin, food proteins or a mixture thereof.

2. Food product according to Claim 1, characterized in that the outer envelope (2) constitutes a support for the surface outer floras (3) corresponding to the desired flavour.

3. Food product according to either of Claims 1 and 2, characterized in that the outer envelope (2) constitutes a support for a nutrient medium which is appropriate to the surface outer floras (3).

4. Food product according to Claim 3, characterized in that the nutrient medium consists of a product chosen from the group made up of glucose, tryptone, yeast extracts and sodium chloride.

5. Food product according to any one of Claims 1 to 4, characterized in that it also comprises a wrapping (4) which includes at least one layer (5) which is particularly flexible and is applied as a whole onto the product while providing mask regions (6) where the product—especially the outer envelope (2) is in contact with it and other free regions (7), the free regions (7) permitting the development of the surface outer flora (3) and, in contrast, the mask regions (6) preventing this development, the purpose of the combination of the free regions (7) with flora and of the mask regions (6) without flora being to limit the development of the surface floras (3), the effect of which, in combination with the semipermeable envelope (2), is also to direct the maturing of the product and to prolong its life.

6. Food product according to Claim 5, characterized in that the wrapping (4) also includes, in combination, at least one flexible outer layer (8) highly permeable to oxygen and poorly permeable to water vapour applied to the inner layer (5), so as to obtain in the free regions (7) with flora a degree of moisture promoting the development of surface floras (3).

7. Food product according to any one of Claims 1 to 6, characterized in that the outer floras (3) are obtained from Penicillium and especially Penicillium candidum.

8. Food product according to any one of Claims 1 to 7, characterized in that the outer envelope (2) constitutes a support for an antioxidant product taking part in the control of the maturing and in the prolonging of the life of the product.

9. Food product according to any one of the Claims 1 to 8, characterized in that the outer envelope (2) constitutes a support for a food colorant.

10. Food product according to any one of Claims 1 to 9, characterized in that the outer envelope (2) constitutes a support for additional bacteria and/or microorganisms acting on the cheese mass (1) to give it a particular flavour.

11. Food product according to Claim 10, characterized in that the bacteria are Bacterium linens.

12. Food product according to any one of Claims 1 to 11, characterized in that the outer envelope (2) has a thickness of the order of 0.5 mm to 1.5 mm, appropriate to provide it with the desired semipermeability, depending on the nature of the envelope.

13. Food product according to any one of Claims 1 to 12, characterized in that the cheese mass (1) is of the soft-body type in which the fat content of dry matter is between approximately 25% and 75%.

14. Food product according to Claim 5, characterized in that the inner layer (5) of the wrapping (4) has a thickness of the order of 2 mm to 4 mm so as to create spaces (9) for the development of surface floras (3) in the free regions (7).

15. Food product according to any one of Claims 1 to 14, characterized in that the mask regions (6) and the free regions (7) are distributed at least partially in an at least substantially uniform manner or at random, according to the regions of support of the inner layer (5) on the product, or according to the configuration of the inner layer (5).

16. Food product according to any one of Claims 1 to 15, characterized in that the inner layer (5) consists either of a sheet which has the general shape of a straw mat whose constituent components are disconnected or of a corrugated material.

17. Food product according to any one of Claims 1 to 16, characterized in that the free regions (7) represent approximately between 15% and 60% of the total outer surface area of the product.

18. Food product according to Claim 9, characterized in that the colorant comprises at least one carotenoid.

19. Food product according to Claim 16, characterized in that the outer layer (8) of the wrapping (4) is produced by means of a polyethylene or polypropylene film.

20. Process for the treatment of a food product comprising an initially little-matured cheese mass, with the exception of melted cheeses, characterized in that a little-matured cheese mass (1)—that is to say after brining followed by a primary maturing for a period of the order of a few hours to a few days—is clad with an essentially semipermeable outer envelope (2) consisting of a food gel, which is an aqueous solution of at least one compound chosen from the group made up of alginates, carrageenates, gelatin, food proteins or a mixture thereof; on the outer surface of the envelope (2) are placed appropriate surface ferments to permit the developement of outer surface floras (3) corresponding to the desired flavour, which are chosen especially from Penicillium; to the outer envelope is applied an appropriate wrapping, on the one hand to permit the controlled development of the outer floras (3) on the surface of the product and with time and, on the other hand, to permit the controlled maturing of the cheese mass (1) with a view to ensuring a prolonged life.

21. Process according to Claim 20, characterized in that, to prepare the gel, from 5 to 50 g/l of carrageenan, from 2 to 5 g/l of tryptone, from 0.5 to 3 g/l of glucose and from 1 to 5 g/l of yeast extract are dissolved in water.

22. Process according to Claim 20, characterized in that, to prepare the gel, from 50 to 400 g/l of gelatin are dissolved in water.

23. Process according to any one of Claims 20 to 22, characterized in that, to clad the cheese mass (1) with the outer envelope (2), the gel is produced, it is raised to a temperature of the order of 30°C to 75°C to make it liquid or viscous, the gel is either sprayed in this consistency onto the cheese mass (1) or the cheese mass (1) is dipped in the gel, and the gel is allowed to solidify, particularly at, or close to, room temperature.

24. Process according to any one of Claims 20 to 23, characterized in that an appropriate nutrient medium for the surface ferments, which is chosen particularly from the group made of glucose, tryptone, yeast extracts and sodium chloride; and/or antioxidant product chosen particularly from the group consisting of carotenoids, ascorbic acid, citric acid, tocopherols and food substances which have an antioxygenated action; and/or bacteria and/or microorganisms for giving a particular flavour to the cheese mass, especially Bacterium linens; and/or a food colorant, especially a carotenoid, are added to the gel during its preparation.

25. Process according to any one of Claims 20 to 24, characterized in that the surface ferments are placed as soon as the gel solidifies and over its entire outer surface, especially by spraying.

26. Process according to any one of Claims 20 to 25, characterized in that the wrapping is applied over the whole outer envelope (2) after a secondary maturing of the product ranging from a few hours to a few (especially two) days.

27. Process according to any one of Claims 20 to 26, characterized in that a first inner wrapping layer (5) permitting mask regions (6) and free regions (7) to be formed is applied first, and then a second outer layer (8) which is highly permeable to oxygen and poorly permeable to water vapour.

28. Wrapping intended for a food product comprising an initially little-matured cheese mass, with the exception of melted cheeses, according to any one of Claims 1 to 19, characterized in that it comprises at least one, especially flexible, inner layer (5) intended to be applied as a whole onto the product and its purpose being to provide mask regions (6) where the product—especially its outer envelope (2) is in contact with the inner layer (5) and other free regions (7), the free regions (7) permitting the development of surface external floras (3) and, in contrast, the mask regions (6) preventing the development, the purpose of the combination of the free regions (7) with flora and of the mask regions (6) without flora being to limit the development of surface floras (3), which also has the effect of directing the maturing of the product and of prolonging its life; and, in combination at least one flexible outer layer (8), highly permeable to oxygen and poorly permeable to water vapour, applied to the inner layer (5) so as to obtain in the free regions (7) with flora a degree of moisture promoting the development of surface floras (3), the outer layer (8) consisting of a polyethylene or polypropylene film; the inner layer (5) consisting of a sheet having a general form of a straw mat whose constituent components are disconnected or of a corrugated material, the free regions (7) representing approximately 15% and 60% of the total outer surface area of the product.

Fig. 1

Fig. 2

Fig. 3

Fig. 4